# EUROPEAN PATENT SPECIFICATION

(11) **EP 0 665 302 B1**
(45) Date of publication and mention of the grant of the patent: **03.05.2000**
(21) Application number: 95100426.6
(22) Date of filing: 13.01.1995
(51) Int. Cl.: C22C 1/04, B22F 1/00

(54) **Nitriding tantalum powder**
Verfahren zum Nitrieren von Tantalpulver
Procédé par l'obtention de poudres de nitrure de tantale

(30) Priority: 26.01.1994 US 187598
(43) Date of publication of application: 02.08.1995
(73) Proprietor: H.C. Starck, INC., Newton, Massachusetts 02164 (US)
(72) Inventor: Tripp, Terrance B., c/o HC Starck, Inc., Newton, MA 02164 (US); Wolf, Rüdiger, Dr., c/o HC Starck, Inc., Newton, MA 02164 (US)
(74) Representative: Steiling, Lothar, Dr.

(56) References cited:
- EP-B- 0 647 349
- DE-A- 3 130 392
- GB-A- 2 051 873
- US-A- 4 508 563
- US-A- 4 544 403
- US-A- 4 722 756
- DATABASE WPI Section Ch, Week 9216 Derwent Publications Ltd., London, GB; Class L03, AN 92-127413 & JP-A-04 069 914 ( TOWA ELECTRON KK) , 5 March 1992

## Description

### BACKGROUND OF THE INVENTION

The present invention relates to ultra fine tantalum powders and high capacitance anodes/capacitors made from such powders.

The art of making electrolytic tantalum capacitors that comprise sintered porous anodes is nearly a Century old. The anodes are formed (i.e. oxidized or anodized) to produce tantalum oxide at the pore defining faces along exposed particle surfaces, followed by overcoating the tantalum oxide with a manganese dioxide layer, produced by infusing manganese nitrite into the porous mass and decomposing it by pyrolysis. A counter-electrode (cathode) is applied and the device is packaged and tested. The anodes have been made of primary powder particles and agglomerated powder particles (as well as fiber and flake/powder mixtures). Within the last two decades the art has seen intense efforts to reduce primary powder particle size thereby increasing effective surface area of the primary particles and secondary particles (agglomerates of the primary particles) and/or sintered anodes made from such particles, ultimately yielding very high capacitance in capacitors using such anodes - currently on the order of 20,000 - 50,000 microfarad volts per gram, some two to three times state of the art ranges of ten to fifteen years ago.

Those schooled in the art of making solid tantalum capacitors have long known that an excessively high oxygen content in the powder degrades the performance of the devices. The problem of excess oxygen is especially acute when the manufacturing process involves but welded capacitor anode pellets which must be double sintered. One method of lowering the oxygen content of tantalum powders is to deoxidize the agglomerated powder by heating it with magnesium followed by passivation in air and then acid leaching to remove magnesium oxide and excess magnesium. Traditional deoxidation can lower the oxygen content of powders capable of making double sintered capacitors with up to 25,000 CV/gm. The 30,000 CV/gm and above powders have so much surface area that traditional magnesium treatment cannot lower the oxygen content of the powder to a level where it can be processed using the double sintering pellet manufacturing process into acceptable solid tantalum capacitors.

US-A 4,544,403 discloses a process of producing tantalum powder wherein the powder is treated with a compound containing at least two elements selected from carbon, nitrogen and sulfur prior to thermal agglomeration of the powder.

According to JP-A-4-69,914 it is proposed to treat sintered tantalum with nitrogen at 800°C.

WO 94/25,971 (EP-B-647,349) of earlier priority discloses doping of tantalum powder for capacitor usage with 500 to 7,000 ppm nitrogen and 700 to 3,000 ppm oxygen.

It is an object of the invention to treat the surface of the fine particle tantalum powder in such a way as to reduce the oxygen content of the powder below the level achieved by the traditional magnesium treatment method.

It is a further object of the invention to provide enhancement of the stability of fine particle tantalum powders (i.e. stability of later product forms incorporating powders, as enhanced through the invention).

These objects are achieved with the tantalum metal powders according to claims 1 and 2 and the processes according to claims 3 and 4.

### SUMMARY OF THE INVENTION

The invention comprises a process of producing stabilized ultra fine tantalum powder and the resultant powder product and products of further processing (anode capacitors).

The powder according to claim 1 of the invention is a tantalum metal powder of 0.3 to 4 µm particle size suitable for anode usage in 20,000 to 50,000 microfarad·volts / g capacitors of reduced oxygen content and a total nitrogen content of 100 to 500 ppm, consisting of a tantalum core of low nitrogen content and a surface layer of higher nitrogen content.

Preferably the powder is an agglomerated tantalum metal powder of 1 to 5 µm particle size, as claimed in claim 2.

The process according to claim 3 of the invention comprises the manufacture of tantalum metal powder according to Claim 1, comprising the steps of:
(a) forming the powder of 0.3 to 4 µm particle size,
(b) exposing the powder to alkaline earth metal reducing agent in a reaction zone and at a temperature level of about 700 to 1,100°C and
(c) reducing the reaction zone temperature to 200 to 360°C and admitting a gaseous atmosphere of a nitrogen containing passivating material to the zone to nitride the active surface of the powder to an extent of adding at least 100 ppm to the overall powder N₂ content.

Preferably primary powder particles are produced by sodium reduction under conditions controlled to yield 0.3 to 4 µm size product, typically with oxygen levels of 1,500 to 8,000 ppm and, optionally, agglomerating the powders through well-known-to-the-art methods to 1 to 5 µm secondary particle size.

The powders are thereafter deoxidized preferably in a vacuum furnace with an alkaline earth reducing agent by heating to 700 to 1,100°C to reduce the dissolved and surface oxygen of the powder, and thereafter the powder is nitrided at a temperature of 200 to 360°C.

The resultant powder (and end products from it) yield a surprising leakage stability enhancement. The result powders' oxygen content is lower than that of powders deoxidized by known methods. The powders have a nitrogen content of 100 to 500 ppm.

Based on the results of studies of the kinetics of the nitriding of tantalum, the reaction would not be expected to occur at an appreciable extent at temperatures below 500°C. The fact that significant nitriding of tantalum occurred with unpassivated deoxidized powder was attributed to the high chemical reactivity of the oxygen free tantalum surface. An important feature of the invention is that the process puts the nitrogen on the surface of the tantalum powder where it can effectively block the pickup of oxygen. This lowering of surface oxygen concentration cannot be achived by, for example, mixing tantalum nitride powder with tantalum powder. Only the reduced oxygen powders produced by surface nitriding had improved leakage performance.

Other objects, features and advantages will be apparent from the following detailed description of preferred embodiments taken in conjunction with the accompanying drawings in which:

### BRIEF DESCRIPTION OF THE DRAWINGS

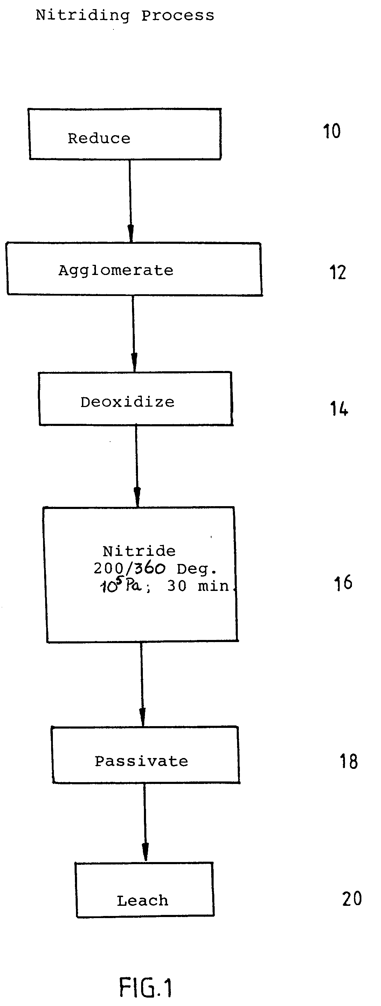

Fig. 1 is a block diagram of steps of the process of the invention according to a preferred embodiment thereof.

### DETAILED DESCRIPTION OF PREFERRED EMBODIMENTS

Fig. 1 is a block diagram of the process steps described generally in the above Summary of the Invention.

The reduction step 10 is carried out in a stirred reactor of the type illustrated in U.S. patent 2.950.185 to Hellier et al. Modern enhancements of such reactors and reduction processes carried out therein are well known. A stirred, molten charge of K₂TaF₇ diluted with NaCl, is contacted with sodium reducing agent and the process is completed to effect substantially complete liberation of tantalum values from the fluotantalate. The reaction mass is cooled and the tantalum is freed, by mechanical breakdown and acid leaching of the mass, and mechanically formed and sieved or otherwise size classified to obtain 0.3 - 4 µm (FAPD) size primary particles.

Agglomeration step 12 (which is optional) comprises forming lightly pressed masses of the primary particles and sintering in vacuum, typically at 1.200 to 1.500°C for 30 to 180 minutes to achieve a porous mass, which is broken down into one to five µm size secondary (agglomerated) particles by mechanical means.

The (primary or secondary) particles are deoxidized (step 14) as described generally above. A typical deoxidation furnace charge consisting of tantalum and magnesium chips is maintained under argon gas at a temperature between 900 and 1.000°C for one to four hours.

The nitriding step 16 is carried out in the deoxidation furnace after cooling the charge to a temperature between 200 and 360°C. The argon in the chamber is replaced by nitrogen or a nitrogen/nitrous oxide mixture or other gases indicated below and held for thirty minutes after which the nitrogen containing gas is replaced with argon and the system is cooled to room temperature.

Passivation step 18 and leaching step 20 are accomplished as follows: The powder is exposed in several steps increasing partial pressures with oxygen as argon/oxygen or argon/air mixtures followed by leaching (step 20) with dilute mineral acid to remove the MgO and residual magnesium.

The practice of the invention and its benefits are further illustrated by the following non-limiting Examples:

### Example 1:

Samples of nominal 30,000 CV/gm were mixed with magnesium powder and deoxidized at 950°C. The deoxidized powders were allowed to cool under argon to 100, 200, 300 oder 400°C. After removing the argon, the reaction chamber was filled with nitrogen at 10⁵ Pa (1 atm) pressure for 30 minutes. The nitrogen was then replaced by argon, and the system was allowed to cool to room temperature. The powders were passivated by a well-known-to-the-art method leached with dilute mineral acid, rinsed with high purity water and dried. The nitrogen and oxygen contents of the powders are given in Table I. Virtually no tantalum nitride was formed at 100°C and the extent of nitriding was excessive at 400°C. The powders nitrided at 200°C and above had lower oxygen content.

**TABLE I**

| Nitrogen and Oxygen Content of Deoxidized Ta Powder after Nitriding at Various Temperatures | | |
|---|---|---|
| Nitriding Treatment | Nitrogen (ppm) | Oxygen (ppm) |
| None (comparative example) | 65 | 2,300 |
| 100 (comparative example) | 92 | 2,400 |
| 200 | 230 | 2,000 |
| 300 | 280 | 2,060 |
| 400 (comparative example) | 9,800 | 1,690 |

### Example 2:

Two samples of nominal 30,000 CV/gm powder were deoxidized at 950°C an nitrided at 250°C as described in Example 1. Pellets made from the powders were sintered at 1,500°C for 20 minutes. The sintered pellets were anodized to 150 V and tested for leakage using known-to-the-art methods. The nitrogen content of the powders are given in Table II. The oxygen concentration before and after sintering and the wet test leakages are summarized in Table II. The nitrided powders had lower oxygen contents before and after sintering and lower wet test leakages than the unnitrided powders.

**TABLE II**

| Results of 250°C Nitriding | | | | | |
|---|---|---|---|---|---|
| Powder Number | Nitrided | Nitrogen (ppm) | Oxygen Before Sintering (ppm) | Oxygen After Sintering (ppm) | Leakage (nA/µF.V) |
| 1 | No | 75 | 3310 | 3970 | 0.92 |
| 1 | Yes | 280 | 2020 | 2830 | 0.49 |
| 2 | No | 60 | 2690 | 3520 | 0.97 |
| 2 | Yes | 240 | 2020 | 2830 | 0.65 |

### Example 3:

Three samples of nominal 30,000 CV/gm tantalum powder were deoxidized at 950°C and nitrided at 300°C as described in Example 1. Pellets made from the powder were sintered at 1,500°C for 20 minutes. The sintered pellets were anodized to 150 V and tested for leakage using known-to-the-art methods. The nitrogen content of the powders are summarized in Table III. The nitrided powders had lower oxygen content before and after sintering and lower wet test leakage than the untreated powders.

**TABLE III**

| Results of 300°C Nitriding | | | | | |
|---|---|---|---|---|---|
| Powder Number | Nitrided | Nitrogen (ppm) | Oxygen Before Sintering (ppm) | Oxygen After Sintering (ppm) | Leakage (nA/µF.V) |
| 4 | No | 96 | 3260 | 4000 | 0.90 |
| 4 | Yes | 310 | 2020 | 2850 | 0.54 |
| 5 | No | 67 | 2750 | 3970 | 1.12 |
| 5 | Yes | 400 | 1840 | 2830 | 0.68 |
| 6 | No | 53 | 2420 | 3270 | 2.74 |
| 6 | Yes | 104 | 2030 | 2840 | 0.67 |

### Example 4:

Four samples of tantalum powder were deoxidized at 950°C and nitrided at 250°C as described in Example 1 except the nitrogen was replaced by a mixture of 90 % nitrogen and 10 % nitrous oxide.

Pellets made from the nominal 20,000 CV/gm powders were sintered at 1,500°C for 20 minutes, anodized to 150 V and tested for leakage. The nominal 50,000 CV/gm powders were tested for leakage using pellets sintered at 1,450°C for 20 minutes and anodized to 120 V. The nitrogen and oxygen content of the powders are given in Table V. The wet test leakages are summarized in Table V and show that the nitrided powders have lower leakage than the non-nitrided powders.

**TABLE IV**

| Results of Nitriding with N₂/N₂O at 250°C | | | | | |
|---|---|---|---|---|---|
| Powder Number | Nominal Capacitance (µF.V/gm) | Nitrided | Nitrogen (ppm) | Oxygen (ppm) | Leakage (nA/µF.V) |
| 7 | 20,000 | No | 87 | 1480 | 0.44 |
| 7 | 20,000 | Yes | 185 | 1200 | 0.31 |
| 8 | 20,000 | No | 52 | 1240 | 0.29 |
| 8 | 20,000 | Yes | 150 | 1020 | 0.26 |
| 9 | 50,000 | No | 62 | 2550 | 0.83 |
| 9 | 50,000 | Yes | 180 | 2200 | 0.57 |
| 10 | 50,000 | No | 78 | 2770 | 1.13 |
| 10 | 50,000 | Yes | 240 | 2100 | 0.63 |

### Example 5:

A sample of nominal 30,000 CV/gm tantalum powder was deoxidized at 1,000°C using magnesium. The system containing the deoxidized tantalum was cooled to 360°C and nitrogen gas was allowed to pass over the powder for four hours. The passivated powder was washed with dilute mineral acid, rinsed with water and dried. Pressed pellets were sintered at 1,500°C for 10 minutes and anodized to 50 V and tested for leakage using known-to-the-art methods.

The nitrogen and oxygen chemistry of the powder and the leakage of the anodized sintered pellets are compared with those of untreated powder and pellets in Table VI. The nitriding process reduced the oxygen content and wet test leakage relative to the same properties for the untreated powder.

**TABLE V**

| Results Of Nitriding At 360°C Using Nitrogen Flow | | | | |
|---|---|---|---|---|
| Powder Numer | Nitrided | Nitrogen (ppm) | Oxygen (ppm) | Leakage (nA/µF.V) |
| 1 | No | 110 | 2210 | 0.35 |
| 1 | Yes | 500 | 1860 | 0.24 |

### Example 6:

Nominal 30,000 CV/gm tantalum powder was mixed with tantalum nitride made by reacting high purity tantalum powder with nitrogen at 950°C, to give five samples with different nitrogen concentrations between 300 and 5,000 ppm. Pressed Pellets made from the powder samples were sintered at 1,600°C for 20 minutes and anodized to 100 V and tested for leakage using known-to-the-art methods. The nitrogen and oxygen concentration and wet test leakage results are given in Table I. Similar results were obtained under other sintering and formation conditions. There was no improvement in the wet test leakage resulting from the addition of discrete tantalum nitride to the tantalum powder.

**Table I**

| Nitrogen Added (ppm) | Oxygen (ppm) | Leakage (nA/µF-V) |
|---|---|---|
| None | 2700 | 0.16 |
| 300 | 2780 | 0.14 |
| 500 | 2780 | 0.15 |
| 1000 | 2820 | 0.13 |
| 2000 | 2840 | 0.14 |
| 5000 | 2910 | 0.13 |

The passivating (nitriding) agents can include passivating gas atmosphere components selected from the group consisting of nitrogen, oxides of nitrogen, nitrogen halides, amides and organic compounds of nitrogen and cyanide compounds.

## Claims

1. A tantalum metal powder of 0.3 to 4 µm particle size suitable for anode usage in 20,000 to 50,000 microfarad·volts / g capacitors of reduced oxygen content and a total nitrogen content of 100 to 500 ppm, consisting of a tantalum core of low nitrogen content and a surface layer of higher nitrogen content.

2. An agglomerated tantalum metal powder of 1 to 5 µm particle size suitable for anode usage in 20,000 to 50,000 microfarad·volts / g capacitors of reduced oxygen content and a total nitrogen content of 100 to 500 ppm, consisting of a tantalum core of low nitrogen content and a surface layer of higher nitrogen content.

3. Process for the manufacture of tantalum metal powder according to Claim 1, comprising the steps of:
(a) forming the powder of 0.3 to 4 µm particle size,
(b) exposing the powder to alkaline earth metal reducing agent in a reaction zone and at a temperature level of about 700 to 1,100°C, and
(c) reducing the reaction zone temperature to 200 to 360°C and admitting a gaseous atmosphere of a nitrogen containing passivating material to the zone to nitride the active surface of the powder to an extent of adding at least 100 ppm to the overall powder N₂ content.

4. Process for the manufacture of tantalum metal powder according to Claim 2, comprising the steps of:
(a) forming the powder of 0.3 to 4 µm particle size and agglomerating said powder to 1 to 5 micron particle size,
(b) exposing the agglomerated powder to alkaline earth metal reducing agent in a reaction zone and at a temperature level of about 700 to 1,100°C, and
(c) reducing the reaction zone temperature to 200 to 360°C and admitting a gaseous atmosphere of a nitrogen containing passivating material to the zone to nitride the active surface of the powder to an extent of adding at least 100 ppm to the overall powder N₂ content.

5. Process in accordance with Claim 3 or 4 and comprising the further step of (d) sintering the nitrided powder to a porous pellet form.

6. Process according to anyone of Claims 3 to 5, wherein step (b) is under vacuum.

7. Process according to anyone of Claims 3 to 6, wherein the step (c) passivating material includes one or more components selected from the group consisting of nitrogen, oxides of nitrogen, nitrogen halides, amides and organic compounds of nitrogen and cyanide compounds all in gaseous form.

## Patentansprüche

1. Tantalmetall-Pulver einer Teilchengröße von 0,3 bis 4 µm, das zur anodischen Verwendung in Kondensatoren mit 20 000 bis 50 000 µF·V/g geeignet ist, mit einem reduzierten Sauerstoffgehalt und einem Gesamtstickstoffgehalt von 100 bis 500 ppm, das aus einem Tantalkern mit niedrigem Stickstoffgehalt und einer Oberflächenschicht mit einem höheren Stickstoffgehalt besteht.

2. Agglomeriertes Tantalmetall-Pulver einer Teilchengröße von 1 bis 5 µm, das zur anodischen Verwendung in Kondensatoren mit 20 000 bis 50 000 µF·V/g geeignet ist, mit einem reduzierten Sauerstoffgehalt und einem Gesamtstickstoffgehalt von 100 bis 500 ppm, das aus einem Tantalkern mit niedrigem Stickstoffgehalt und einer Oberflächenschicht mit einem höheren Stickstoffgehalt besteht.

3. Verfahren zur Herstellung von Tantalmetall-Pulver gemäß Anspruch 1, umfassend die Schritte:
(a) der Bildung des Pulvers einer Teilchengröße von 0,3 bis 4 µm,
(b) das Einwirkenlassen eines Erdalkalimetall-Reduktionsmittels auf das Pulver in einer Reaktionszone und bei einem Temperaturbereich von etwa 700 bis 1100 °C, und
(c) der Reduzierung der Temperatur der Reaktionszone auf 200 bis 360 °C und des Zuführens einer gasförmigen Atmosphäre eines Stickstoff-enthaltenden Passivierungsmaterials zu der Zone, um die aktive Oberfläche des Pulvers in einem solchen Grade zu nitridieren, daß wenigstens 100 ppm zu dem Gesamt-N₂-Gehalt des Pulvers hinzufügt werden.

4. Verfahren zur Herstellung von Tantalmetall-Pulver gemäß Anspruch 2, umfassend die Schritte
(a) der Bildung des Pulvers einer Teilchengröße von 0,3 bis 4 µm und des Agglomerierens des Pulvers auf eine Teilchengröße von 1 bis 5 µm,
(b) das Einwirkenlassen eines Erdalkalimetall-Reduktionsmittels auf das agglomerierte Pulver in einer Reaktionszone und bei einem Temperaturbereich von etwa 700 bis 1100 °C, und
(c) der Reduzierung der Temperatur der Reaktionszone auf 200 bis 360 °C und des Zuführens einer gasförmigen Atmosphäre eines Stickstoff-enthaltenden Passivierungsmaterials zu der Zone, um die aktive Oberfläche des Pulvers in einem solchen Grade zu nitridieren, daß wenigstens 100 ppm zu dem Gesamt-N₂-Gehalt des Pulvers hinzufügt werden.

5. Verfahren gemäß den Ansprüchen 3 oder 4 und umfassend den weiteren Schritt
(d) des Sinterns des nitridierten Pulvers zu einer porösen Pellet-Form.

6. Verfahren gemäß irgendeinem der Ansprüche 3 bis 5, worin der Schritt (b) unter Vakuum durchgeführt wird.

7. Verfahren gemäß irgendeinem der Ansprüche 3 bis 6, worin der Schritt (c) des Passivierungsmaterials eine oder mehrere Komponenten enthält, die aus der Gruppe ausgewählt sind, bestehend aus Stickstoff, Oxiden des Stickstoff, Stickstoffhalogeniden, Amiden und organischen Verbindungen des Stickstoffs und Cyanid-Verbindungen, die alle in gasförmiger Form vorliegen.

## Revendications

1. Une poudre de tantale métallique à la dimension de particule de 0,3 à 4 µm convenant à l'utilisation sous forme d'anode dans des condensateurs à la capacitance de 20 000 à 50 000 microfarads.volts/g, à une teneur réduite en oxygène et une teneur totale en azote de 100 à 500 ppm, qui consiste en un noyau de tantale à faible teneur en azote et une couche superficielle à plus forte teneur en azote.

2. Une poudre agglomérée de tantale métallique à la dimension de particule de 1 à 5 µm convenant à l'utilisation dans des anodes de condensateur à la capacitance de 20 000 à 50 000 microfarads.volts/g, ayant une teneur réduite en oxygène et une teneur totale en azote de 100 à 500 ppm, qui consiste en un noyau de tantale à faible teneur en azote et une couche superficielle à une teneur plus forte en azote.

3. Procédé pour la préparation d'une poudre de tantale métallique selon la revendication 1, qui comprend les stades opératoires suivants :
a) on forme la poudre à une dimension de particule de 0,3 à 4 µm,
b) on expose la poudre à un agent réducteur du type métal alcalino-terreux dans une zone de réaction et à un niveau de température d'environ 700 à 1100°C, et
c) on abaisse la température de la zone de réaction jusqu'à un niveau de 200 à 360°C et on admet dans cette zone une atmosphère gazeuse de matière passivante contenant de l'azote, en vue de provoquer la nitruration de la surface active de la poudre dans une mesure correspondant à l'addition d'au moins 100 ppm à la teneur globale en azote de la poudre.

4. Procédé de préparation d'une poudre de tantale métallique selon la revendication 2, qui comprend les stades opératoires suivants :
a) on forme la poudre à une dimension de particule de 0,3 à 4 µm et on agglomère cette poudre jusqu'à la dimension de particule de 1 à 5 µm,
b) on expose la poudre agglomérée à un agent réducteur du type métal alcalino-terreux dans une zone de réaction et à un niveau de température d'environ 700 à 1100°C, et
c) on abaisse la température de la zone de réaction jusqu'à un niveau de 200 à 360°C et on admet dans cette zone une atmosphère gazeuse de matière passivante contenant de l'azote, en vue de provoquer la nitruration de la surface active de la poudre dans une mesure correspondant à l'addition d'au moins 100 ppm à la teneur globale en azote de la poudre.

5. Procédé selon la revendication 3 ou 4, comprenant un autre stade opératoire (d) de frittage de la poudre nitrurée sous forme de comprimé poreux.

6. Procédé selon l'une quelconque des revendications 3 à 5, dans lequel le stade opératoire (b) est mis en oeuvre sous vide.

7. Procédé selon l'une quelconque des revendications 3 à 6, dans lequel la matière passivante du stade opératoire (c) contient un ou plusieurs composants choisis parmi l'azote, les oxydes de l'azote, les halogénures d'azote, les amides, les dérivés organiques azotés et les dérivés cyanés, tous à l'état gazeux.
